# EUROPEAN PATENT APPLICATION

(11) **EP 4 755 933 A1**
(43) Date of publication of application: **10.06.2026**
(21) Application number: 24849524.4
(22) Date of filing: 26.07.2024
(51) Int. Cl.: C08F 14/06, C08F 2/38, C08F 2/44, C08F 2/18, C08K 5/10

(54) **METHOD FOR PREPARING VINYL CHLORIDE-BASED POLYMER**

(30) Priority: 28.07.2023 KR 20230098674
(71) Applicant: LG Chem, Ltd., Seoul 07336 (KR)
(72) Inventor: PARK, Jae Hyun, Daejeon 34122 (KR); YOUK, Kyung Seog, Daejeon 34122 (KR); KIM, Kun Ji, Daejeon 34122 (KR); KIM, Hyun Chul, Daejeon 34122 (KR); HA, Hyun Kyou, Daejeon 34122 (KR)
(74) Representative: Goddar, Heinz J.
(86) International application number: PCT/KR2024/010966
(87) International publication number: WO 2025/028955

(57) **Abstract**

The present invention relates to a method for preparing a vinyl chloride-based polymer having a low content of a gel and a high-polymerization degree with a suspension polymerization by using a dispersant composition containing a lipophilic additive together with a chain extender.

## Description

### [Technical Field]

### CROSS REFERENCE TO RELATED APPLICATION

The present application claims the benefit of the priority of Korean Patent Application No. 10-2023-0098674, filed on July 28, 2023, the entire contents of which is incorporated herein for all purposes by this reference.

### Technical Field

The present invention relates to a novel method for preparing a vinyl chloride-based polymer of a high-polymerization degree, which can minimize a content of a gel that may be generated by a chain extender added during the preparation process for the purpose of increasing the polymerization degree.

### [Background Art]

Due to the recent rapid spread of an electric vehicle, the charging cable market for charging the electric vehicle is also rapidly expanding. A polyethylene (PE) resin, a thermoplastic polyurethane (TPU) resin, a polyvinyl chloride (PVC) resin, etc., which have reinforced flame retardancy, are being considered as materials that can be used for such charging cables.

However, the polyethylene resin has a problem in that a large amount of flame retardant must be added to improve the flame retardancy due to limitation of the flame retardancy of the resin itself, but the addition of such large amount of flame retardant actually deteriorates mechanical properties of the resin itself. In addition, the thermoplastic polyurethane resin has a problem of showing a satisfactory effect in terms of the flame retardancy, but an inferior effect in terms of heat resistance.

Meanwhile, although the polyvinyl chloride resin is relatively inexpensive, has excellent mechanical strength, weather resistance, insulation, and oil resistance, so that it can secure a certain level of the flame retardancy, there is a problem that the polyvinyl chloride resin, which is a coating material, also lacks the heat resistance and is damaged by heat generated during rapid charging. Therefore, in order to apply the polyvinyl chloride resin to the charging cable, the flame retardancy and the heat resistance must be further improved.

As a method for improving the flame retardancy and the heat resistance of a polyvinyl chloride resin, chlorinated polyvinyl chloride (C-PVC) made by additionally chlorinating the polyvinyl chloride resin has been proposed. However, there are problems in that since such chlorinated polyvinyl chloride causes a high cost in its preparation process due to a difficulty of the preparation, it cannot take advantage of the relatively low price of existing polyvinyl chloride, and that since the chlorinated polyvinyl chloride contains a lot of partially highly chlorinated chains, a gas of hydrogen chloride generated by thermal decomposition of these chains during a molding process contaminates a surface of the mold. In addition, if the surface of the mold is contaminated as such, carbonization marks will appear on a surface of the finally molded product, which will also reduce continuous productivity during the molding process.

As an alternative to this, a method of improving heat resistance by increasing a polymerization degree of the polyvinyl chloride resin itself may also be considered. The polymerization degree of a general polyvinyl chloride resin is around 1,000, and even for a polyvinyl chloride resin used for special purposes, the polymerization degree is only about 1,500. In order to increase the polymerization degree, a polymerization temperature must be significantly lowered during a process of preparing the polyvinyl chloride resin, but if the polymerization temperature is lowered, reactivity decreases to deteriorate productivity so that there is a limitation in preparing the polyvinyl chloride resin having a high-polymerization degree. Further, a method of adding a large amount of a crosslinker or a chain extender may be considered to increase the polymerization degree, but there is a fatal disadvantage in that a fish-eye is generated because a large amount of a gel is formed due to the crosslinker added in a large amount.

Therefore, it is required to develop research on a novel method for preparing a vinyl chloride-based polymer that can further increase the polymerization degree, while minimizing a content of the gel within the vinyl chloride-based polymer finally obtained.

### [Disclosure]

### [Technical Problem]

The present invention is to provide a novel method for preparing a vinyl chloride-based polymer that has a low content of gel and a high-polymerization degree.

### [Technical Solution]

In order to solve the above-mentioned problems, the present invention provides a novel method for preparing a vinyl chloride-based polymer.
Specifically, (1) the present invention provides a method for preparing a vinyl chloride-based polymer comprising the steps of: (S1) introducing polymerization water, an initiator, a dispersant composition, a chain extender, and vinyl chloride-based monomers into a polymerization reactor and initiating a polymerization reaction, and (S2) performing the polymerization reaction to prepare the vinyl chloride-based polymer, wherein the dispersant composition contains a lipophilic additive, and a combined HLB value of the dispersant composition is 8 to 11.5.
(2) The present invention provides the method for preparing the vinyl chloride-based polymer according to the item (1), wherein the polymerization reaction is a suspension polymerization.
(3) The present invention provides the method for preparing the vinyl chloride-based polymer according to the item (1) or (2), wherein the dispersant composition contains a hydrophilic dispersant and the lipophilic additive, and the combined HLB value of the dispersant composition is 9 to 11.5.
(4) The present invention provides the method for preparing the vinyl chloride-based polymer according to any one of the items (1) to (3), wherein the hydrophilic dispersant is a polyvinyl alcohol, a methyl cellulose-based dispersant, or a mixture thereof.
(5) The present invention provides the method for preparing the vinyl chloride-based polymer according to any one of the items (1) to (4), wherein the lipophilic additive is one or more selected from the group consisting of sorbitan monolaurate, sorbitan monostearate, sorbitan monopalmitate, sorbitan monooleate, sorbitan sesquioleate, sorbitan trioleate, sorbitan isostearate, and polyoxyethylene sorbitan monostearate.
(6) The present invention provides the method for preparing the vinyl chloride-based polymer according to any one of the items (1) to (5), wherein the dispersant composition and the chain extender are mixed in advance and then introduced into the polymerization reactor.
(7) The present invention provides the method for preparing the vinyl chloride-based polymer according to any one of the items (1) to (6), wherein the chain extender is diallyl isophthalate.
(8) The present invention provides the method for preparing the vinyl chloride-based polymer according to any one of the items (1) to (7), wherein the chain extender is added in an amount of 0.01 to 0.5 parts by weight based on 100 parts by weight of the vinyl chloride-based monomers.
(9) The present invention provides the method for preparing the vinyl chloride-based polymer according to any one of the items (1) to (8), wherein the polymerization reaction is performed at a temperature of 50 °C or lower.
(10) The present invention provides the method for preparing the vinyl chloride-based polymer according to any one of the items (1) to (9), wherein the initiator is one or more selected from the group consisting of a diacyl peroxide-based initiator, a peroxydicarbonate-based initiator, a peroxyester-based initiator, a sulfate-based initiator, and an azo-based initiator.
(11) The present invention provides the method for preparing the vinyl chloride-based polymer according to any one of the items (1) to (10), wherein the initiator is added in an amount of 0.02 to 0.2 parts by weight based on 100 parts by weight of the vinyl chloride-based monomers.
(12) The present invention provides the method for preparing the vinyl chloride-based polymer according to any one of the items (1) to (11), wherein the polymerization reaction is performed in the presence of a protective colloid.
(13) The present invention provides the method for preparing the vinyl chloride-based polymer according to any one of the items (1) to (12), wherein the protective colloid is one or more selected from the group consisting of a vinyl alcohol resin, a cellulose, and an unsaturated organic acid polymer.
(14) The present invention provides the method for preparing the vinyl chloride-based polymer according to any one of the items (1) to (13), wherein the protective colloid is added in an amount of 0.03 to 3.0 parts by weight based on 100 parts by weight of the vinyl chloride-based monomers.
(15) The present invention provides the method for preparing the vinyl chloride-based polymer according to any one of the items (1) to (14), wherein a content of a gel in the vinyl chloride-based polymer is 5 % by weight or less.

### [Advantage Effects]

A preparation method of the present invention makes possible it to prepare a vinyl chloride-based polymer having a high-polymerization degree while minimizing a content of a gel that may generated due to addition of a chain extender, by using a dispersant composition containing a lipophilic additive together with a chain extender. The vinyl chloride-based polymer prepared by the present invention can be used in various fields requiring high strength, wear resistance, and long-term heat resistance.

### [Mode for Invention]

Hereinafter, the present invention will be described in more detail.

The terms and words used in this specification and claims should not be construed to be limited to their common or dictionary meanings, but should be construed with meanings and concepts consistent with the technical idea of the present invention, based on the principle that the inventor can appropriately define terminological concepts in order to explain his invention in the best way.

Meanwhile, the term "vinyl chloride-based polymer" used in this specification may refer to polymer chains derived from vinyl chloride-based monomers, which comprehensively represents compounds produced by polymerizing the vinyl chloride-based monomers, that is, by polymerizing the vinyl chloride monomer alone or by polymerizing a mixture of the vinyl chloride monomer and vinyl-based monomers that can be copolymerized with the vinyl chloride monomer.

### Method for preparing a vinyl chloride-based polymer

The present invention provides a method for preparing a vinyl chloride-based polymer comprising the steps of: (S1) introducing polymerization water, an initiator, a dispersant composition, a chain extender, and vinyl chloride-based monomers into a polymerization reactor and initiating a polymerization reaction, and (S2) performing the polymerization reaction to prepare the vinyl chloride-based polymer, wherein the dispersant composition contains a lipophilic additive, and a combined HLB value of the dispersant composition is 8 to 11.5.

According to the method for preparing the vinyl chloride-based polymer of the present invention, a polymerization degree can be increased due to the chain extender and a gel formation, which is a side effect of the chain extender, can be also minimized, by controlling a combined HLB value to an appropriate range with the chain extender and applying the dispersant composition containing the lipophilic additive.

Below, the method for preparing the vinyl chloride-based polymer of the present invention will be described step by step.

### Step (S1) of initiating a polymerization reaction

A method for preparing a vinyl chloride-based polymer according to the present invention comprises the step (S1) of introducing polymerization water, an initiator, a dispersant composition, a chain extender, and vinyl chloride-based monomers into a polymerization reactor and initiating a polymerization reaction.

The Step (S1) is a step of initiating the polymerization reaction according to a general method for preparing the vinyl chloride-based polymer. In particular, the polymerization in the vinyl chloride-based polymer preparation method of the present invention is a suspension polymerization, wherein the suspension polymerization may be performed in the presence of polymerization water. The polymerization water may include as a polymerization solvent various types of polymerization water such as distilled water or deionized water, and preferably, deionized water. A temperature of the polymerization water may be appropriately selected in consideration of the temperature at which the suspension polymerization is carried out, and an amount of the polymerization water may also be appropriately used depending on the polymerization conditions, for example, the polymerization water of 70 parts by weight or more, specifically 70 to 300 parts by weight, based on 100 parts by weight of the vinyl chloride-based monomers may be used.

The initiator is not particularly limited as long as it is applied to the suspension polymerization of the vinyl chloride-based monomers. Specifically, the initiator may be one or more selected from the group consisting of a diacyl peroxide-based initiator, a peroxydicarbonate-based initiator, a peroxyester-based initiator, a sulfate-based initiator, and an azo-based initiator.

More specifically, the diacyl peroxide-based initiator may be one or more selected from the group consisting of dicumyl peroxide, dipentyl peroxide, 3,3,5-trimethyl hexanoyl peroxide, and dilauryl peroxide. The peroxydicarbonate-based initiator may be one or more selected from the group consisting of diisopropyl peroxydicarbonate, di-sec-butyl peroxydicarbonate, and di-2-ethylhexyl peroxide. The peroxyester-based initiator may be t-butylperoxypivalate, cumylperoxydecanoate, t-butylperoxyneodecanoate, or a mixture thereof. The sulfate-based initiator may be potassium persulfate, ammonium persulfate, or a mixture thereof. The azo-based initiator may be azobis-2,4-dimethylvaleronitrile.

The initiator may be added in an amount of 0.02 to 0.2 parts by weight, preferably 0.04 to 0.12 parts by weight, based on 100 parts by weight of the vinyl chloride-based monomers. If an amount of the added initiator is too small, the reaction time is delayed to decrease productivity, and if an amount of the added initiator is too large, the initiator may not be completely consumed during the polymerization process to remain in the finally prepared vinyl chloride-based polymer, thereby deteriorating thermal stability of the resin.

The dispersant composition contains a lipophilic additive capable of suppressing gel formation by the chain extender. More specifically, the dispersant composition may contain a hydrophilic dispersant that performs the function of dispersing the vinyl chloride-based monomers in the polymerization water, together with the lipophilic additive.

In the present invention, both a dispersion effect and an inhibition effect of the gel formation can be maximized by appropriately controlling a HLB value of the two components contained in the dispersant composition and ratios therebetween. More specifically, a combined HLB value of the dispersant composition may be 8 to 11.5, preferably 8 or more, 8.3 or more, 8.6 or more, 8.8 or more, or 9 or more, and may be 11.5 or less, 11.4 or less, or 11.3 or less.

The HLB value refers to a hydrophilic-lipophilic balance, and the higher HLB value refers to the higher hydrophilicity. The combined HLB value means an average value based on the weight of the HLB value of each component. For example, the combined HLB value of 60 wt% of component A having HLB of 10 and 40 wt% of component B having HLB of 5 is 10x0.6+5x0.4 = 8.

The hydrophilic dispersant contained in the above dispersant composition is a component having a higher HLB, and its specific HLB value may be 12 or more, 14 or more, or 16 or more and may be 20 or less or 19 or less. The lipophilic additive is a component having a lower HLB, and may be 12 or less, 10 or less, or 9 or less and may be 2 or more, 3 or more, or 4 or more.

More specifically, the hydrophilic dispersant may be a polyvinyl alcohol, a methyl cellulose-based dispersant, or a mixture thereof, and the lipophilic additive may be one or more selected from the group consisting of sorbitan monolaurate, sorbitan monostearate, sorbitan monopalmitate, sorbitan monooleate, sorbitan sesquioleate, sorbitan trioleate, sorbitan isostearate, and polyoxyethylene sorbitan monostearate. The hydrophilic dispersant and the lipophilic additives mentioned above are components having suitable hydrophilicity and lipophilicity. If the components are combined at an appropriate weight ratio and used after adjusting the combined HLB to be within the range described above, a polymerization degree of the vinyl chloride-based polymer can be further increased while minimizing the gel formation.

The above dispersant composition may be added in an amount of 0.01 to 0.5 parts by weight based on 100 parts by weight of the vinyl chloride-based monomers, preferably 0.01 parts by weight or more, 0.02 parts by weight or more, 0.03 parts by weight or more, 0.04 parts by weight or more, or 0.05 parts by weight or more, and 0.5 parts by weight or less, 0.45 parts by weight or less, 0.4 parts by weight or less, 0.35 parts by weight or less, or 0.3 parts by weight or less. If an amount of the added dispersant composition is too small, it may be difficult to disperse the vinyl chloride-based monomers and the chain extender, and if the amount is too large, there may be a problem that physical properties of the vinyl chloride-based polymer are not desirable.

Meanwhile, it may be preferable that the dispersant composition and the chain extender are mixed in advance and then added to the polymerization reactor. If the dispersant composition and the chain extender are not directly introduced into the polymerization reactor separately, but are mixed in advance and then introduced all at once, the gel formation can be further suppressed due to appropriate mixing of the chain extender and the lipophilic additive.

The above chain extender functions to increase the polymerization degree by extending a chain of the formed vinyl chloride-based polymer. A component commonly known to be used as the conventional chain extender is a phthalate-based component, but when phthalate is used, a chain extension efficiency is low so that a large amount of the phthalate must be added to prepare a polymer having a high-polymerization degree, which is not economical. In addition, since the phthalate itself is designated as a toxic substance due to a high acute toxicity level thereof, there is a problem that toxicity may remain in the vinyl chloride-based polymer that is finally prepared. Accordingly, it may be preferable that the chain extender used in the present invention is an isophthalate-based chain extender. The isophthalate-based chain extender has a technical advantage that it has excellent chain extension efficiency and can exhibit sufficient chain extension efficiency even with a relatively small amount of use, as well as it has low toxicity of the vinyl chloride-based polymer finally prepared due to non-toxicity.

The chain extender used in the present invention may preferably have excellent compatibility with the vinyl chloride-based monomers, and may particularly be diallyl isophthalate.

The chain extender may be added in an amount of 0.01 to 0.5 parts by weight, preferably 0.05 to 0.3 parts by weight, based on 100 parts by weight of the vinyl chloride-based monomers. If an amount of the added chain extender is too small, the polymerization degree of the prepared vinyl chloride-based polymer cannot be sufficiently increased, and thus the purpose of the present invention to prepare the vinyl chloride-based polymer having a high-polymerization degree cannot be achieved. If an amount of the added chain extender is too large, a content of the gel may rapidly increase due to the excessively added chain extender.

Meanwhile, the polymerization reaction initiated in the step (S1) may be performed in the presence of a protective colloid. The protective colloid may be one or more selected from the group consisting of a vinyl alcohol resin, a cellulose, and an unsaturated organic acid polymer.

The vinyl alcohol resin used as the protective colloid may preferably have a degree of hydration of 30 to 90 % by weight and may be preferable that a viscosity of a 4% aqueous solution is 10 to 60 cps at 15 to 25°C. Further, the cellulose used as the protective colloid may preferably have a hydroxypropyl group content of 3 to 20 % by weight and may be preferable that a viscosity of a 2% aqueous solution is 10 to 20,000 cps at 15 to 25°C. In addition, the unsaturated organic acid polymer used as the protective colloid may be one or more selected from the group consisting of an acrylic acid polymer, a methacrylic acid polymer, an itaconic acid polymer, a fumaric acid polymer, a maleic acid polymer, a succinic acid polymer, and a gelatin. If the protective colloid that satisfies the above-mentioned conditions is used, stability of the vinyl chloride-based monomers during the preparation process can be further improved.

The protective colloid may be added in an amount of 0.03 to 3.0 parts by weight, particularly preferably 0.05 to 2.0 parts by weight, based on 100 parts by weight of the vinyl chloride-based monomers. If an amount of the added protective colloid is within the above-mentioned preferable range, a droplet stability increases so that a phenomenon of particle cleavage and agglomeration is appropriately controlled during the preparation of the vinyl chloride-based polymer, thereby making it possible to prepare the vinyl chloride-based polymer containing desirable internal pores.

In this step, if necessary, a hydrogen ion concentration regulator may be added to the polymerization reactor. The hydrogen ion concentration regulator which is available to the present invention includes sodium bicarbonate (NaHCO₃), sodium borate (Na₂B₄O₇), sodium diphosphate (Na₂HPO₄), sodium carbonate (Na₂CO₃), potassium dihydrogen phosphate (KH₂PO₄), ammonium hydroxide (NH₄OH), potassium tartrate (KHC₄H₄O₆), potassium hydrogen phthalate (KHC₈H₄O₄), calcium hydroxide (Ca(OH)₂), etc., which can be used alone or in a combination of two or more.

### Step (S2) of proceeding a polymerization reaction

After initiating the polymerization reaction as described above, the step (S2) of proceeding the polymerization reaction can be performed. According to the step (S2), the vinyl chloride-based polymer can be finally prepared by continuing the polymerization reaction for a certain time at a certain temperature condition.

The temperature condition at which the polymerization reaction is carried out in this step may be 50°C or lower, preferably 30 to 50°C, particularly preferably 40 to 50°C. The lower the temperature at which the polymerization reaction is carried out, the higher the polymerization degree of the obtained vinyl chloride-based polymer. However, if the reaction temperature is excessively lowered, the reaction rate is greatly lowed, and thus the productivity of the vinyl chloride-based polymer in the preparation process is greatly decreased. Therefore, within the range of the above temperature condition, it is possible to efficiently prepare the vinyl chloride-based polymer of excellent quality and high polymerization while minimizing the productivity decrease.

In this step, the reaction can be terminated by adding a reaction terminator. The reaction terminator may terminate the polymerization reaction by reacting it with the remaining unreacted initiator to lose function of the initiator. The reaction terminator may be one or more selected from the group consisting of a phenol compound, an amine compound, a nitrile compound, and a sulfur compound. The phenol compound may be one or more selected from the group consisting of triethylene glycol-bis-3-(3-t-butyl-4-hydroxy-5-methylphenyl)propionate, hydroquinone, p-methoxy phenol, t-butyl-4-hydroxyanisole, n-octadecyl-3-(4-hydroxy-3,5-di-t-butylphenyl)propionate, 2,5-di-t-butyl hydroquinone, 4,4'-butylidene bis(3-methyl-6-t-butyl phenol), t-butyl catechol, 4,4-thiobis(6-t-butyl-m-cresol), and tocopherol. The amine compound may be one or more selected from the group consisting of N,N-diphenyl-p-phenylenediamine and 4,4-bis(dimethylbenzyl)diphenyl. The nitrile compound may be one or more selected from the group consisting of 2-phenyl nitronyl nitroxide, 3-imidazoline nitroxide, and 4-hydroxy-2,2,6,6-tetramethyl-piperidine-1-oxyl. The sulfur compound may be one or more selected from the group consisting of dodecyl mercaptan and 1,2-biphenyl-2-thiol.

In a method for preparing the vinyl chloride-based polymer according to the present invention, additives such as an antioxidant, a base, a cross-linking agent, a polymerization regulator, a chain transfer agent, an antistatic agent, an anti-scaling agent, and a surfactant may be additionally added without being particularly limited for the types and contents of the additives, and may be used in the common types and amounts of the additives known in the art. The additives may be added all at once or sequentially at any point of time during the polymerization process.

### Dehydration and drying step (S3)

A method for preparing the vinyl chloride-based polymer according to the present invention may comprise the step (S3) of dehydrating and drying the polymerization reaction product obtained after the polymerization reaction is completed through the previous steps.

The dehydration and drying method in this step is not particularly limited, and any known dehydration and drying method for preparing the vinyl chloride-based polymer can be applied without particular limitation. For example, the final vinyl chloride-based polymer may be obtained by first proceeding the dehydration using an equipment such as a centrifugal separator, and then secondarily performing the drying step using an equipment such as a fluidized bed dryer. The vinyl chloride-based polymer obtained after being subjected to the dehydration and drying steps may be in the form of beads.

A content of the gel in the vinyl chloride-based polymer prepared through the method of the present invention described above may be 5 wt% or less, preferably 4 wt% or less or 3.5 wt% or less. Since the vinyl chloride-based polymer prepared through the method of the present invention is a vinyl chloride-based polymer of a high-polymerization degree containing a low content of the gel, it is particularly suitable for use as materials of various applications that require high strength, wear resistance, and long-term heat resistance.

Further, an average particle diameter of the vinyl chloride-based polymer prepared through the method of the present invention may be 100 *µ*m or more and 200 *µ*m or less, and may be preferably 100 *µ*m or more, 105 *µ*m or more, 110 *µ*m or more, or 115 *µ*m or more, and 200 *µ*m or less, 195 *µ*m or less, 190 *µ*m or less, 185 *µ*m or less, 180 *µ*m or less, 175 *µ*m or less, 170 *µ*m or less, 165 *µ*m or less, or 60 *µ*m or less. If the average particle diameter of the vinyl chloride-based polymer is within the above-described range, handling may be particularly easy.

Hereinafter, preferred Examples are described to aid understanding of the present invention. However, the following Examples are to merely illustrate the present invention and are not intended to limit the scope of the present invention.

### Materials

Polyvinyl alcohol having a HLB value of 18 was used as a hydrophilic dispersant, and sorbitan monolaurate (product name: SPAN20) having a HLB value of 8.6 or sorbitan monostearate (product name: SPAN60) having a HLB value of 4.7 was used as a lipophilic additive.

### Example 1

A mixture containing a dispersant composition and a chain extender was prepared by mixing diallyl isophthalate and sorbitan monolaurate as a lipophilic additive for 1 hour. A combined HLB of the dispersant composition was set to be 8.6. Thereafter, 390 kg of deionized water was added into a stainless-steel polymerization reactor of an internal volume of 1 m³ equipped with a reflux condenser and a stirrer, and 150 g of polyvinyl alcohol having a degree of hydration of 78.5 mol%, 100 g of polyvinyl alcohol having a degree of hydration of 40.7 mol%, 30 g of hydroxypropylmethyl cellulose as a protective colloid, and the mixture prepared above were added into the reactor in batches. In this case, an amount of sorbitan monolaurate in the dispersant composition was set to be 0.1 part by weight based on 100 parts by weight of vinyl chloride-based monomers to be added later, and an amount of diallyl isophthalate was set to be 0.15 parts by weight based on the vinyl chloride-based monomers. After that, 300 kg of the vinyl chloride monomer was added, and 240 g of a 75 wt% solution of t-butylperoxy neodecanoate as an organic peroxide initiator composition was added, and then a temperature of the reactor was raised to 47°C to initiate a polymerization reaction.

Thereafter, the polymerization reaction was carried out while maintaining the reaction temperature at 47°C, and was terminated by adding 15 g of 4-hydroxy-2,2,6,6-tetramethylpiperidine-1-oxyl and 60 g of triethylene glycol-bis-3-(3-t-butyl-4-hydroxy-5-methylphenyl)propionate as a reaction terminator at a point of time when a pressure of the polymerization reactor reached 5.8 kg/cm². Subsequently, unreacted monomers and polymer slurry were recovered from the reactor, and then the polymer slurry was dehydrated and dried in a fluidized bed dryer to obtain a bead-shaped vinyl chloride-based polymer.

### Example 2

A vinyl chloride-based polymer was obtained by the same manner as in Example 1, except that polyvinyl alcohol was further included as the dispersant composition, and a combined HLB of the dispersant composition was set to be 9.5 by adding polyvinyl alcohol in an amount of 0.01 parts by weight based on 100 parts by weight of the vinyl chloride-based monomers.

### Example 3

A vinyl chloride-based polymer was obtained by the same manner as in Example 1, except that polyvinyl alcohol was further included as the dispersant composition, and a combined HLB of the dispersant composition was set to be 10.2 by adding polyvinyl alcohol in an amount of 0.02 parts by weight based on 100 parts by weight of the vinyl chloride-based monomers.

### Example 4

A vinyl chloride-based polymer was obtained by the same manner as in Example 1, except that polyvinyl alcohol was further included as the dispersant composition, and a combined HLB of the dispersant composition was set to be 10.8 by adding polyvinyl alcohol in an amount of 0.03 parts by weight based on 100 parts by weight of the vinyl chloride-based monomers.

### Example 5

A vinyl chloride-based polymer was obtained by the same manner as in Example 1, except that polyvinyl alcohol was further included as the dispersant composition, and a combined HLB of the dispersant composition was set to be 11.3 by adding polyvinyl alcohol in an amount of 0.04 parts by weight based on 100 parts by weight of the vinyl chloride-based monomers.

### Comparative Example 1

A vinyl chloride-based polymer was obtained by the same manner as in Example 1, except that the dispersant composition was not added.

### Comparative Example 2

A vinyl chloride-based polymer was obtained by the same manner as in Example 1, except that the dispersant composition did not include a lipophilic additive and only a hydrophilic dispersant was used in an amount of 0.03 parts by weight based on 100 parts by weight of the vinyl chloride-based monomers.

### Comparative Example 3

A vinyl chloride-based polymer was obtained by the same manner as in Example 1, except that the dispersant composition did not include a lipophilic additive and only a hydrophilic dispersant was used in an amount of 0.1 part by weight based on 100 parts by weight of the vinyl chloride-based monomers.

### Comparative Example 4

A vinyl chloride-based polymer was obtained by the same manner as in Example 1, except that polyvinyl alcohol was further included as the dispersant composition, and a combined HLB of the dispersant composition was set to be 11.7 by adding polyvinyl alcohol in an amount of 0.05 parts by weight based on 100 parts by weight of the vinyl chloride-based monomers.

### Comparative Example 5

A vinyl chloride-based polymer was obtained by the same manner as in Example 1, except that polyvinyl alcohol was further included as the dispersant composition, and a combined HLB of the dispersant composition was set to be 12.1 by adding polyvinyl alcohol in an amount of 0.06 parts by weight based on 100 parts by weight of the vinyl chloride-based monomers.

The HLB value, the added amount, and the combined HLB value of the hydrophilic dispersant and the lipophilic additive used in Examples 1 to 5 and Comparative Examples 1 to 5 are summarized in Table 1 below. Meanwhile, the added amount in Table 1 below refers to a value of parts by weight value which was added based on 100 parts by weight of the vinyl chloride-based monomers.

**[Table 1]**

| | Hydrophilic dispersant | | Lipophilic additive | | Combined HLB value |
|---|---|---|---|---|---|
| | HLB value | Added amount | HLB value | Added amount | |
| Comparative Example 1 | - | - | - | - | - |
| Comparative Example 2 | 18 | 0.03 | - | - | 18 |
| Comparative Example 3 | 18 | 0.1 | - | - | 18 |
| Example 1 | - | - | 8.6 | 0.1 | 8.6 |
| Example 2 | 18 | 0.01 | 8.6 | 0.1 | 9.5 |
| Example 3 | 18 | 0.02 | 8.6 | 0.1 | 10.2 |
| Example 4 | 18 | 0.03 | 8.6 | 0.1 | 10.8 |
| Example 5 | 18 | 0.04 | 8.6 | 0.1 | 11.3 |
| Comparative Example 4 | 18 | 0.05 | 8.6 | 0.1 | 11.7 |
| Comparative Example 5 | 18 | 0.06 | 8.6 | 0.1 | 12.1 |

### Examples 6 to 13 and Comparative Examples 6 to 8

Vinyl chloride-based polymers were prepared by the same manners as in Examples 1 to 5 and Comparative Examples 1 to 5, except that sorbitan monostearate having a HLB value of 4.7 was used instead of sorbitan monolaurate having a HLB value of 8.6 as a lipophilic additive, and an added amount of the hydrophilic dispersant and the lipophilic additive was adjusted.

The HLB value, the added amount, and the combined HLB value of the hydrophilic dispersant and the lipophilic additive used in Examples 6 to 13 and Comparative Examples 6 to 8 are summarized in Table 2 below. Meanwhile, the added amount in Table 2 below also mean a value of parts by weight value which was added based on 100 parts by weight of the vinyl chloride-based monomers.

**[Table 2]**

| | Hydrophilic dispersant | | Lipophilic additive | | Combined HLB value |
|---|---|---|---|---|---|
| | HLB value | Added amount | HLB value | Added amount | |
| Comparative Example 6 | 18 | 0.01 | 4.7 | 0.1 | 5.9 |
| Comparative Example 7 | 18 | 0.02 | 4.7 | 0.1 | 6.9 |
| Comparative Example 8 | 18 | 0.03 | 4.7 | 0.1 | 7.8 |
| Example 6 | 18 | 0.01 | 4.7 | 0.01 | 11.4 |
| Example 7 | 18 | 0.01 | 4.7 | 0.025 | 8.5 |
| Example 8 | 18 | 0.02 | 4.7 | 0.02 | 11.4 |
| Example 9 | 18 | 0.02 | 4.7 | 0.05 | 8.5 |
| Example 10 | 18 | 0.03 | 4.7 | 0.03 | 11.4 |
| Example 11 | 18 | 0.03 | 4.7 | 0.075 | 8.5 |
| Example 12 | 18 | 0.04 | 4.7 | 0.04 | 11.4 |
| Example 13 | 18 | 0.04 | 4.7 | 0.1 | 8.5 |

### Experimental Example 1. Measurement of a polymerization degree, a gel content, and an average particle diameter of the prepared vinyl chloride-based polymer

A polymerization degree and a gel content of the vinyl chloride-based polymer prepared by the above Examples and Comparative Examples were measured.
1) A polymerization degree: 0.2 g of the vinyl chloride-based polymer obtained through drying after polymerization was dissolved in a cyclohexanone solvent, and then measured with an Ubbelohde viscometer using a specific viscosity method.
2) A gel content: After weighing a cylindrical filter (Thimble filter) paper, the vinyl chloride-based polymer was placed in the cylindrical filter paper, and then inserted into a Soxhlet extractor. After 500 ml of tetrahydrofuran was added to 1 L of a flask, all the glass equipment was connected, and while flowing water into a reflux condenser, stirring, heating, and refluxing were initiated at 95°C, which is higher than the boiling point of tetrahydrofuran. After 48 hours of the reflux, the cylindrical filter paper was taken out, dried in an oven, and weighed to measure a gel content by a difference in the weight of the filter paper (a weight of the filter paper before reflux/a weight of the filter paper after reflux x 100%).
3) An average particle diameter: The average particle diameter was measured with a HELOS particle size analyzer according to ISO 13320.

The measurement results were summarized in Tables 3 and 4 below.

**[Table 3]**

| | Polymerization degree | Gel content (wt%) | Average particle diameter (*µ*m) |
|---|---|---|---|
| Example 1 | 3310 | 3.1 | 150 |
| Example 2 | 3540 | 2.6 | 141 |
| Example 3 | 3810 | 1.2 | 129 |
| Example 4 | 4050 | 0 | 119 |
| Example 5 | 3970 | 0.5 | 195 |
| Comparative Example 1 | 2120 | 12.3 | 148 |
| Comparative Example 2 | 2300 | 10.6 | 113 |
| Comparative Example 3 | 2500 | 9.5 | 74 |
| Comparative Example 4 | 3930 | 0.6 | 97 |
| Comparative Example 5 | 3920 | 0.6 | 90 |

**[Table 4]**

| | Polymerization degree | Gel content (wt%) |
|---|---|---|
| Comparative Example 6 | 2380 | 10.3 |
| Comparative Example 7 | 2450 | 9.8 |
| Comparative Example 8 | 2550 | 8.1 |
| Example 6 | 3940 | 0.6 |
| Example 7 | 3420 | 2.9 |
| Example 8 | 3980 | 0.5 |
| Example 9 | 3550 | 2.5 |
| Example 10 | 4000 | 0.4 |
| Example 11 | 3640 | 2.3 |
| Example 12 | 4010 | 0.4 |
| Example 13 | 3710 | 1.8 |

As can be seen from the above Tables 3 and 4, it was confirmed that the vinyl chloride-based polymer prepared through Examples of the present invention showed a low gel content and a high-polymerization degree. On the other hand, Comparative Examples 1 to 3 where no lipophilic additive was used showed that the vinyl chloride-based polymers having a high gel content and a low-polymerization degree was prepared. From the above, it can be confirmed that in case the lipophilic additive is applied together with the hydrophilic dispersant as in the preparation method of the present invention, effects improved in terms of the polymerization degree and the gel content is achieved.

Meanwhile, it was confirmed that Comparative Examples 4 and 5, in which the same lipophilic additive was used but the combined HLB value of the dispersant composition exceeded 11.5, showed that although the gel content and polymerization degree were similarly excellent to Examples, problems occurred such as the particle diameter which is a basic property of the prepared vinyl chloride-based polymer being excessively small and the bulk density being unnecessarily high. If the particle diameter of the vinyl chloride-based polymer is excessively small, a large amount of fine powders may be generated in the work environment, thereby causing a problem of deteriorating workability. Through this, it was confirmed that it is difficult to satisfy the basic property range of the vinyl chloride-based polymer if the hydrophilic dispersant and the lipophilic additive are not used appropriately. On the other hand, Comparative Examples 8 to 10 in which the HLB value was less than 8 showed that the vinyl chloride-based polymer having a high gel content and a low polymerization degree was prepared, similar to Comparative Examples 1 to 3 in which the lipophilic additive was not used.

From this, it was confirmed that in order to prepare the vinyl chloride-based polymer having a high-polymerization degree and a low gel content while being capable of satisfying the physical property range of a basic vinyl chloride-based polymer, the dispersant composition containing the lipophilic additive and having a combined HLB value of 8 to 11.5 must be used together with the chain extender.

## Claims

1. A method for preparing a vinyl chloride-based polymer comprising the steps of: (S1) introducing polymerization water, an initiator, a dispersant composition, a chain extender, and vinyl chloride-based monomers into a polymerization reactor and initiating a polymerization reaction, and
(S2) performing the polymerization reaction to prepare the vinyl chloride-based polymer,
wherein the dispersant composition contains a lipophilic additive, and
a combined HLB value of the dispersant composition is 8 to 11.5.

2. The method for preparing a vinyl chloride-based polymer according to claim 1,
wherein the polymerization reaction is a suspension polymerization.

3. The method for preparing a vinyl chloride-based polymer according to claim 1,
wherein the dispersant composition contains a hydrophilic dispersant and the lipophilic additive, and the combined HLB value of the dispersant composition is 9 to 11.5.

4. The method for preparing a vinyl chloride-based polymer according to claim 3,
wherein the hydrophilic dispersant is a polyvinyl alcohol, a methyl cellulose-based dispersant, or a mixture thereof.

5. The method for preparing a vinyl chloride-based polymer according to claim 1,
wherein the lipophilic additive is one or more selected from the group consisting of sorbitan monolaurate, sorbitan monostearate, sorbitan monopalmitate, sorbitan monooleate, sorbitan sesquioleate, sorbitan trioleate, sorbitan isostearate, and polyoxyethylene sorbitan monostearate.

6. The method for preparing a vinyl chloride-based polymer according to claim 1,
wherein the dispersant composition and the chain extender are mixed in advance and then introduced into the polymerization reactor.

7. The method for preparing a vinyl chloride-based polymer according to claim 1,
wherein the chain extender is diallyl isophthalate.

8. The method for preparing a vinyl chloride-based polymer according to claim 1,
wherein the chain extender is added in an amount of 0.01 to 0.5 parts by weight based on 100 parts by weight of the vinyl chloride-based monomers.

9. The method for preparing a vinyl chloride-based polymer according to claim 1,
wherein the polymerization reaction is performed at a temperature of 50 °C or lower.

10. The method for preparing a vinyl chloride-based polymer according to claim 1,
wherein the initiator is one or more selected from the group consisting of a diacyl peroxide-based initiator, a peroxydicarbonate-based initiator, a peroxyester-based initiator, a sulfate-based initiator, and an azo-based initiator.

11. The method for preparing a vinyl chloride-based polymer according to claim 1,
wherein the initiator is added in an amount of 0.02 to 0.2 parts by weight based on 100 parts by weight of the vinyl chloride-based monomers.

12. The method for preparing a vinyl chloride-based polymer according to claim 1,
wherein the polymerization reaction is performed in the presence of a protective colloid.

13. The method for preparing a vinyl chloride-based polymer according to claim 12,
wherein the protective colloid is one or more selected from the group consisting of a vinyl alcohol resin, a cellulose, and an unsaturated organic acid polymer.

14. The method for preparing a vinyl chloride-based polymer according to claim 12,
wherein the protective colloid is added in an amount of 0.03 to 3.0 parts by weight based on 100 parts by weight of the vinyl chloride-based monomers.

15. The method for preparing a vinyl chloride-based polymer according to claim 1,
wherein a content of a gel in the vinyl chloride-based polymer is 5 % by weight or less.
